# EUROPÄISCHE PATENTANMELDUNG

(11) **EP 1 602 899 A1**
(43) Veröffentlichungstag der Anmeldung: **07.12.2005**
(21) Anmeldenummer: 05011647.4
(22) Anmeldetag: 31.05.2005
(51) Int. Cl.: G01D 5/26

(54) **Faseroptischer Sensor**

(30) Priorität: 01.06.2004 DE 102004026945
(71) Anmelder: Schleifring und Apparatebau GmbH, 82256 Fürstenfeldbruck (DE)
(72) Erfinder: Schilling, Harry, 85072 Eichstätt (DE); Rank, Matthias, 93497 Wilmering (DE)
(74) Vertreter: Lohr, Georg

(57) **Zusammenfassung**

Ein Faseroptischer Sensor umfasst wenigstens eine lichtleitende Faser (1), mit einer Lichtaustrittfläche (12), einen optischen Sender (15a) zur Einkopplung optischer Signale in die lichtleitende Faser (1) und einen optischen Empfänger (15b) zum Empfang optischer Signale aus der lichtleitenden Faser (1). Weiterhin weist die lichtleitende Faser (1) in dem Bereich der Lichtaustrittsfläche (12) Mittel zur Ablenkung des aus der lichtleitenden Faser (1) austretenden Lichtes in eine von der Längsachse der lichtleitenden Faser (1) abweichende Richtung, vorzugsweise senkrecht zur Faserachse, auf.

## Beschreibung

### Technisches Gebiet

Die Erfindung betrifft einen Faseroptischen Sensor zur Messung von Entfernungen oder zur Bestimmung anderer physikalischer Eigenschaften oder Kenngrößen wie Temperatur, Druck oder Dichte von Objekten in der Nähe einer lichtleitenden Faser.

### Stand der Technik

Faseroptische Sensoren sind in unterschiedlichen Ausführungsformen bekannt. Bei derartigen Sensoren wird grundsätzlich an einem Ende einer optischen Faser Licht eingekoppelt, welches entlang der Faser geführt wird. An dem anderen Ende der Faser tritt das Licht aus und wird von dem zu untersuchenden Objekt zumindest teilweise in dieselbe Faser oder eine andere Faser zurück gestreut oder reflektiert. Dieser Lichtanteil kann nun mittels eines Sensors ausgewertet werden.

Die US 2004/0047536 A1 offenbart einen solchen Fasersensor, der als Drucksensor eingesetzt wird. Das in der Faser geführte Licht wird von einer Membrane, die ihren Abstand zur Faser druckabhängig ändert, in die Faser zurück reflektiert.

Ein Sensor zur Erkennung von Flüssigkeitspegeln ist in der US 2004/0036043 A1 offenbart. Hierin wird zur Pegelmessung die Reflexion des von der Faser ausgesendeten Lichtes an der Flüssigkeitsoberfläche herangezogen.

Der in der US 6,496,265 B1 offenbarte Sensor dient zur Präzisionsmessung von Abständen nach dem Interferometerprinzip. Hierbei wird durch Reflexion am Ende der Faser bzw. am Ende einer an die Faser angebrachten Linse bereits ein Teil des Lichtes zurückgeführt. Der Rest wird von der Faser abgestrahlt und von dem zu messenden Objekt zurück in die Faser reflektiert. Durch Auswertung des Interferenzsignals kann eine hochpräzise Messung erfolgen.

Ein weiterer faseroptischer Sensor ist in der WO 03/069392 A2 veröffentlicht. Dieser Sensor misst den Abstand zu einer unter dem Sensor angebrachten verspiegelten Fläche (Figur 15).

In der DE 3733 464 ist ein optischer Sensor offenbart, in dem zwischen optischem Sender und Empfänger lichtleitende Fasern angeordnet sind. Zur Abtastung ist am Ende einer lichtleitenden Faser ein Sensorspitzenelement vorgesehen.

Die aus dem Stand der Technik bekannten faseroptischen Sensoren haben den Nachteil, dass eine Messung ausschließlich in Richtung der Achse des Lichtwellenleiters erfolgen kann. Oftmals stellt sich aber auch die Aufgabe, eine Messung seitlich oder zumindest schräg zur Achse des Lichtwellenleiters durchzuführen.

### Darstellung der Erfindung

Der Erfindung liegt die Aufgabe zugrunde, einen aus dem Stand der Technik bekannten faseroptischen Sensor dahingehend weiterzubilden, dass dieser in der Lage ist, Messungen seitlich zu Faser vorzunehmen. Weiterhin soll dieser faseroptische Sensor in der Bauform klein und kostengünstig sein und somit ohne zusätzliche diskrete optische Komponenten zur Strahlablenkung realisiert sein.

Eine erfindungsgemäße Lösung dieser Aufgabe ist in dem unabhängigen Patentanspruch angegeben. Weiterbildungen der Erfindung sind Gegenstand der abhängigen Ansprüche.

Ein erfindungsgemäßer faseroptischer Sensor umfasst wenigstens eine lichtleitende Faser 1 mit wenigstens einer Lichtaustrittsfläche 12. Weiterhin ist wenigstens ein optischer Sender 15a zur Einkopplung optischer Signale in die lichtleitende Faser 1 sowie wenigstens ein optischer Empfänger 15b zum Empfang optischer Signale aus der lichtleitenden Faser 1 vorgesehen. So werden die von wenigstens einem optischen Sender 15a in die lichtleitende Faser 1 eingekoppelten optischen Signale in der lichtleitenden Faser bis zu einer Lichtaustrittsfläche 12 geführt. Um nun die optischen Signale aus der lichtleitenden Faser am Ort der Lichtaustrittsfläche 12 herauszuführen, ist diese Lichtaustrittsfläche zur Ablenkung des Lichts ausgebildet. Durch diese wird das Licht in einem vorgegebenen Winkel, abweichend von der Längsachse der lichtleitenden Faser 1 abgelenkt. Dieser Winkel steht vorzugsweise senkrecht zur Längsachse der lichtleitenden Faser. Zur Ablenkung kann beispielsweise ein Spiegel, ein Gitter oder ein anderes optisches Element, welches in die lichtleitende Faser integriert ist und die Richtung des in der Faser geführten Lichts nach außen ablenkt, eingesetzt werden. So kann eine Fläche oder ein Teil einer lichtleitenden Faser (vorzugsweise der mit Sender bzw. Empfänger verbundenen Faser) beispielsweise verspiegelt oder mit einem Gitter beschichtet sein.

Die Ablenkung kann beispielsweise auch durch Totalreflexion oder durch Beugung, Brechung bzw. Streuung an einer Lichtaustrittsfläche erfolgen.

Unter einer lichtleitenden Faser im Sinne dieser Erfindung wird ein Lichtleiter verstanden, in dem das Licht in einem Kern mittels Totalreflexion geführt ist. Es handelt sich hier bevorzugt um Lichtleiter, welche in der Lage sind, Licht über größere Distanzen, d.h. von der Sendeeinheit bzw. Empfangseinheit zum Ort des Sensors bzw. der Messstelle zu führen. Beispiele sind die bekannten Singlemode oder bevorzugt Multimode - Fasern. Besonders bevorzugt sind Gradientenindex-Faser. Ebenso können aber auch Stufenindex-Fasern eingesetzt werden. Die Erfindung ist mit Glasfasern, aber auch mit Kunststoff-Fasern (POF) realisierbar.

Durch die Integration des Mittels zur Lichtablenkung in die Faser ergibt sich ein besonders kompakter und robuster Aufbau. Reflexionen und Dämpfung an einem Übergang zu einem Sensorelement werden vermieden.

In einer besonders vorteilhaften Ausgestaltung der Erfindung sind Mittel zur Ablenkung des aus der lichtleitenden Faser 1 austretenden Lichts durch Reflexion, Beugung, Brechung oder auch Streuung vorgesehen.

Eine weitere vorteilhafte Ausgestaltung der Erfindung sieht vor, dass wenigstens ein Mittel zur Ablenkung als eine weitere Fläche 13 ausgebildet ist. So erfolgt die Ablenkung hier vorzugsweise mittels Totalreflexion an einer unter dem entsprechenden Winkel angeordneten Fläche. Ebenso könnte die Fläche mit Beugungsgitter versehen oder auf ihrer Außenseite verspiegelt sein.

Ebenso könnte eine weitere Fläche 13 so ausgestaltet sein, dass sie einen Teil des in der lichtleitenden Faser geführten Lichts derart in die Faser zurück reflektiert, dass das Licht die Faser selbst oder eine weitere hierfür vorgesehene Lichtaustrittsfläche durchtritt.

Alternativ hierzu könnte wenigstens eine weitere Fläche 13 in einem solchen Winkel zur Achse der lichtleitenden Faser angeordnet sein, dass durch diese zumindest ein Teil des in der lichtleitenden Faser geführten Lichts nach außen tritt. Hierbei ist der Winkel der Fläche 13 derart zu wählen, dass der Austrittswinkel dem vorgegebenen, von der Längsachse der lichtleitenden Faser abweichenden Winkel entspricht.

Weiterhin ist vorteilhaft, wenigstens eine Lichtaustrittsfläche 12 und/oder wenigstens eine weitere Fläche 13 wellenlängenselektiv auszugestalten. Hierbei kann wahlweise die Ablenkung des Lichts wellenlängenselektiv gestaltet werden, wie beispielsweise durch Mittel zur wellenlängenselektiven Reflexion, Beugung, Brechung oder Streuung. Ebenso könnte die Fläche auch als Filter ausgebildet sein.

Eine weitere vorteilhafte Ausgestaltung sieht vor, dass wenigstens ein optischer Sender 15a und wenigstens ein optischer Empfänger 15b an unterschiedlichen Enden der lichtleitenden Faser 1 angeordnet sind. Somit wird in einen ersten Abschnitt der lichtleitenden Faser 1, welcher mit einem optischen Sender 15a verbunden ist, Licht mit hoher Intensität geführt. Dieses Licht wird an wenigstens einer Lichtaustrittsfläche 12 ausgekoppelt und nach der Reflexion an einer Oberfläche eines Messobjekts 11 in eine entsprechende Lichteintrittsfläche 12a des zweiten Abschnitts der lichtleitenden Faser 1 eingekoppelt. Das hier eingekoppelte Licht wird weiter in dem zweiten Abschnitt der lichtleitenden Faser bis hin zu dem optischen Empfänger 15 geführt. Somit ist die Intensität des Lichts im zweiten Abschnitt der lichtleitenden Faser wesentlich geringer, als im ersten Abschnitt. Wird nur eine Faser zur gleichzeitigen hin- und Rückführung des Lichts verwendet, so wird in Richtung zum Messobjekt Licht hoher Intensität und in entgegengesetzter Richtung Licht sehr niedriger Intensität geführt. Bei der Einkopplung bzw. Auskopplung in die Faser müssen in einem solchen Falle richtungsselektive Koppelelemente mit sehr geringem Übersprechen eingesetzt werden. Diese Problematik entfällt vollständig bei einer Unterteilung der Faser in zwei Abschnitte, wie zuvor angegeben.

In einer anderen vorteilhaften Ausgestaltung der Erfindung weist wenigstens eine Austrittfläche eine aktive optische Beschichtung auf. Diese optische Beschichtung umfasst ein Material zur Wellenlängenkonversion des übertragenen Lichts. Es basiert vorzugsweise auf wenigstens einem nichtlinearen optischen Effekt. Vorzugsweise ist dies ein Fluoreszenzeffekt. Durch die Wellenlängenkonversion kann auf einfache Weise im Empfänger zwischen Streulicht von der Lichtquelle und einem Nutzsignal, welches nun die umgewandelte Wellenlänge aufweist, unterschieden werden. Ebenso können auf eine solche Art und Weise unterschiedliche Kanäle, beispielsweise mit Wellenlängenumsetzung, bzw. ohne Wellenlängenumsetzung voneinander getrennt werden. Weiterhin kann eine bekannte Zeitkonstante eines nichtlinearen optischen Effekts, beispielsweise eines Fluoreszenzeffekts zur Zeitmessung und damit zur Abstandsmessung durch Laufzeitauswertung herangezogen werden.

Besonders vorteilhaft ist es, wenn zur Trennung von zwei Richtungen, zwei unterschiedliche fluoreszierende Materialien, mit Abstrahlung bei unterschiedlichen Wellenlängen eingesetzt werden, welche von einer gemeinsamen Lichtquelle angeregt werden.

### Beschreibung der Zeichnungen

Die Erfindung wird nachstehend ohne Beschränkung des allgemeinen Erfindungsgedankens anhand von Ausführungsbeispielen unter Bezugnahme auf die Zeichnungen exemplarisch beschrieben.
Fig. 1 zeigt in schematischer Form eine erfindungsgemäße Vorrichtung.
Fig. 2 zeigt den Strahlengang in einer erfindungsgemäßen Vorrichtung.
Fig. 3 zeigt eine weitere Ausführungsform der Erfindung, mit einem zweigeteilten Sensor.
Fig. 4 zeigt den schematischer Fonn eine alternative Ausführungsform der Erfindung.
Fig. 5 zeigt eine weitere Ausführungsform der Erfindung mit einem diskreten, wellenlängenselektiven Spiegel.
Fig. 6 zeigt einen erfindungsgemäßen Fasersensor mit zwei Austrittflächen.
Fig. 7 zeigt einen erfindungsgemäßen Fasersensor mit vier Austrittflächen.
Fig. 8 zeigt den Fasersensor aus Fig. 5 in perspektivischer Ansicht.
Fig. 9 zeigt einen Fasersensor entsprechend dem Stand der Technik.
Fig. 10. zeigt einen Fasersensor entsprechend dem Stand der Technik mit zwei lichtleitenden Fasern.
Fig. 11 zeigt eine integrierte Sende/Empfangseinheit für mehrkanalige Fasersensoren.
Fig. 12 zeigt eine Abwandlung von Fig. 9 mit 1xn - Kopplern.
Fig. 13 zeigt eine Ausführungsform mit wellenlängenselektiven Filtern.

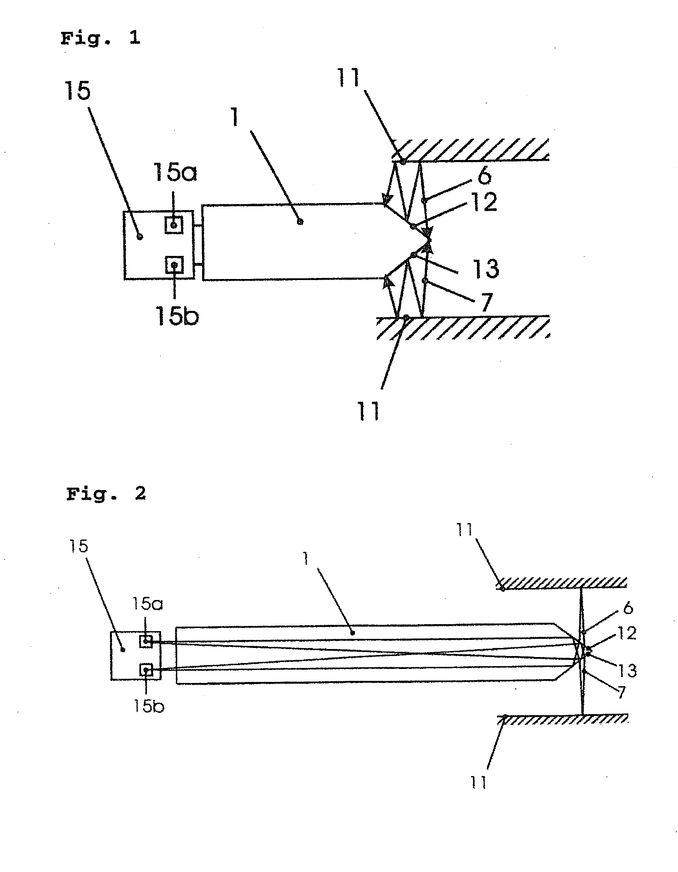

Fig. 1 zeigt in allgemeiner Form schematisch einen erfindungsgemäßen faseroptischen Sensor. Kernstück dieses faseroptischen Sensors ist die lichtleitende Faser 1. Ein optischer Sender 15a koppelt Licht in die lichtleitende Faser ein. Dieses Licht wird entlang der lichtleitenden Faser geführt und tritt an den beiden Flächen 12 und 13 seitlich aus der Faser aus. Es wird dann von der Oberfläche des Messobjekts 11 reflektiert und tritt zumindest teilweise wieder über die Flächen 12 und 13 in die lichtleitende Faser 1 ein. Dieses Licht wird nun in umgekehrter Richtung in der lichtleitenden Faser zu dem optischen Empfänger 15b geführt, welcher die Informationen des Lichtes auswerten kann. Hierbei kann beispielsweise die Dämpfung, die Laufzeit, eine Phasenverschiebung oder auch ein Interferenzmuster ausgewertet werden. Zumindest für den letzten Fall sollte hierzu die Lichtquelle kohärentes Licht aussenden. In einer besonders kompakten Ausführungsform sind wie hier dargestellt, der optische Sender 15a und der optische Empfänger 15b in einem gemeinsamen Gehäuse zusammengefasst. Die hier beispielhaft dargestellte Anordnung weist zwei Oberflächen 12 und 13 auf. Selbstverständlich ist eine erfindungsgemäße Anordnung auch nur mit einer Oberfläche oder mit einer größeren Anzahl von Oberflächen, beispielsweise 4 Oberflächen realisierbar. In dem hier dargestellten Fall mit zwei Oberflächen ergibt sich ein erster Lichtpfad 6 in beiden Richtungen zwischen der ersten Austrittfläche 12 und einem ersten Teil der Oberfläche des Messobjekts 11. Ein zweiter Lichtpfad 7 besteht ebenfalls in beiden Richtungen zwischen der zweiten Austrittfläche 13 und einem zweiten Teil der Oberfläche des Messobjekts 11.

Fig. 2 zeigt den Strahlengang in einer erfindungsgemäßen Vorrichtung. Es sind die von dem optischen Sender 15a ausgehenden Lichtpfade zu den Lichtaustrittsflächen 12 und 13 im inneren der lichtleitenden Faser 1 eingezeichnet. Ebenso sind die Pfade des rücklaufenden, von denen Oberflächen des Messobjekts reflektierten Lichtes optischen Empfänger 15b dargestellt.

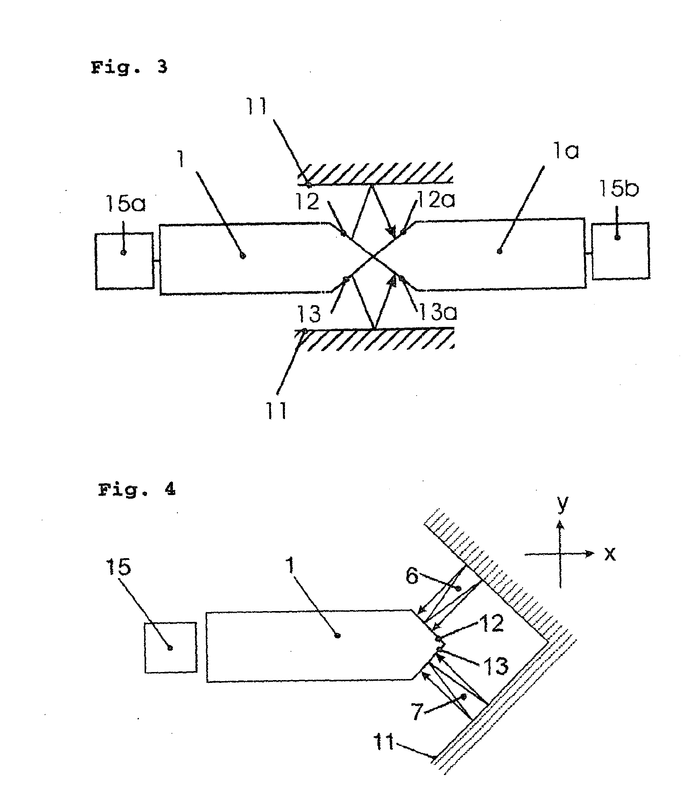

Fig. 3 zeigt eine weitere Ausführungsform der Erfindung, mit einem zweigeteilten Sensor. Hierbei ist die lichtleitende Faser 1 in ein erstes Segment zur Lichtaussendung 1a, welches mit dem optischen Sender 15a verbunden ist und ein zweites Segment zum Lichtempfang 1b, welches mit dem optischen Empfänger 15ba verbunden ist, unterteilt. Durch diese Unterteilung ergibt sich eine besonders gute und einfache Entkopplung zwischen Sendesignal und Empfangssignal. Der Lichtaustritt erfolgt durch die beiden Lichtaustrittsflächen 12 und 13 des ersten Fasersegments 1a. Der Lichteintritt erfolgt durch die beiden Flächen 12a und 13a des zweiten Fasersegments 1b.

Fig. 4 zeigt ebenfalls in allgemeiner Form schematisch einen erfindungsgemäßen faseroptischen Sensor, welcher ähnlich, wie in Fig. 1 dargestellt, aufgebaut ist. Im Gegensatz zur Fig. 1 verlaufen hier die Teile der Oberfläche des Messobjekts nicht parallel zur Achse des faseroptischen Sensors sondern in einem Winkel schräg dazu. Entsprechend sind auch die Austrittflächen 12 und 13 ausgelegt, so dass das Licht in einem winkel vorzugsweise senkrecht zur Oberfläche des Messobjekts aus der Faser ein- und austritt.

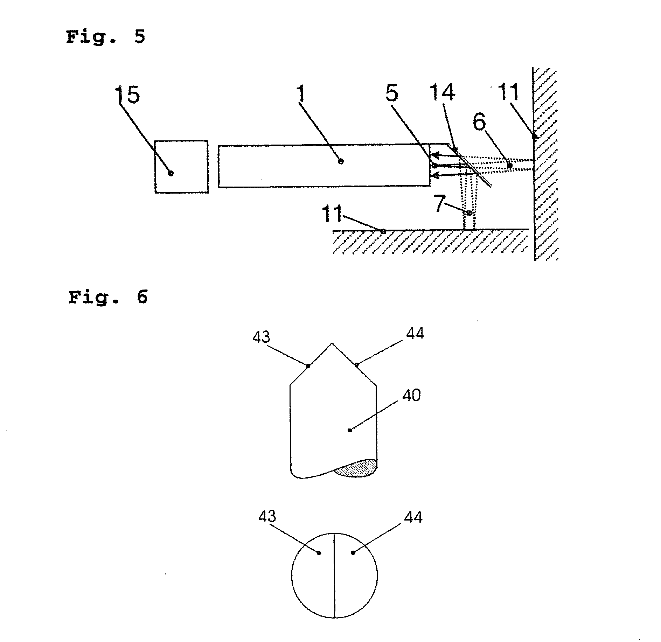

Fig. 5 zeigt eine weitere Ausführungsform der Erfindung, bei der das Licht entlang eines ersten Lichtpfades 6 parallel zur Achse der lichtleitenden Faser 1 verläuft und entlang eines zweiten Lichtpfades 7 senkrecht zur Achse der lichtleitenden Faser mittels eines wellenlängenselektiven Spiegels 14 abgelenkt wird.

In Fig. 6 ist ein erfindungsgemäßer faseroptischer Sensor dargestellt. Am Ende der lichtleitenden Faser 40 sind durch einen meißelförmigen Anschliff die erste Austrittfläche 43 sowie die zweite Austrittfläche 44 entstanden. Der obere Teil des Bildes zeigt den faseroptischen Sensor in seitlicher Ansicht, der untere Teil des Bildes zeigt den Sensor in der Draufsicht.

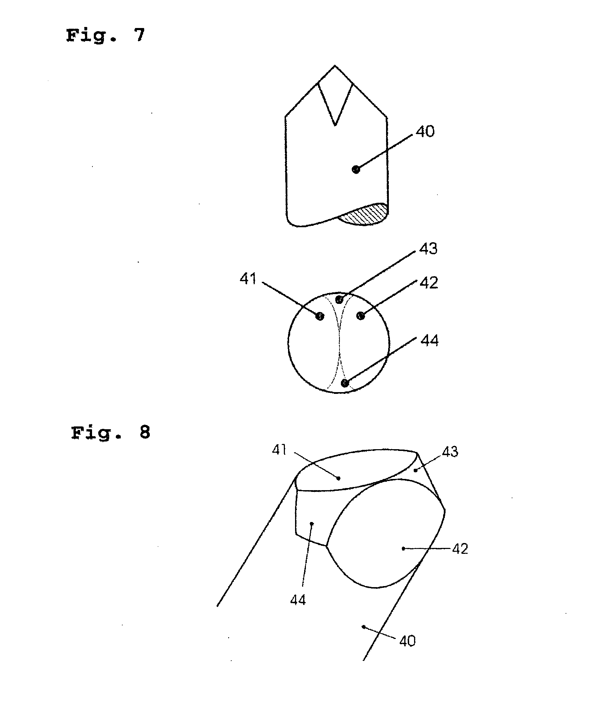

Fig. 7 zeigt einen erfindungsgemäßen faseroptischen Sensor mit vier Sensorflächen. Dieser weist nun eine erste Sensorfläche 43, eine zweite Sensorfläche 44 sowie eine dritte Sensorfläche 41 und eine vierte Sensorfläche 44 auf. Somit kann dieser Sensor für unterschiedliche Messungen in vier Achsen eingesetzt werden.

In Fig. 8 ist der Sensor aus Fig. 7 perspektivisch dargestellt.

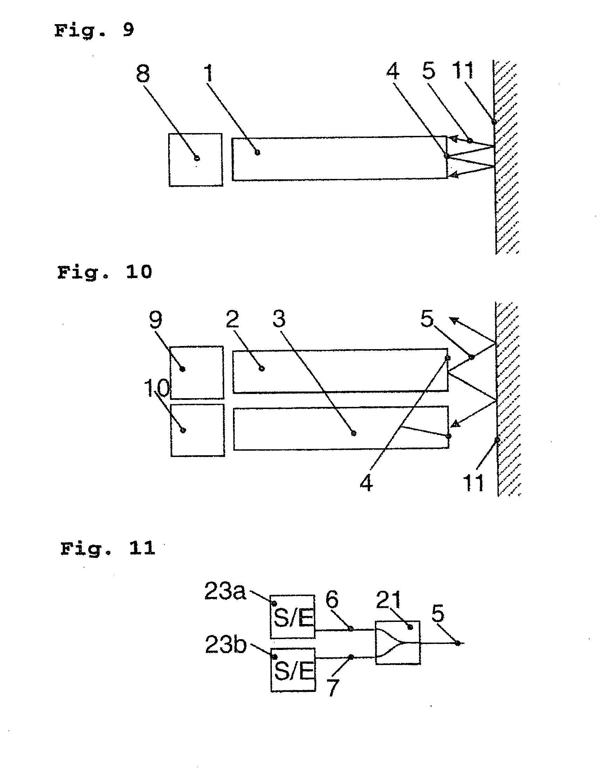

In Fig. 9 ist ein Fasersensor entsprechend dem Stand der Technik dargestellt. Dieser Fasersensor basiert auf einer lichtleitenden Faser 1, in welche von einer an einem ersten Ende angebrachten integrierten Sende- und Empfangseinheit 8 Licht eingekoppelt wird. Dieses Licht wird durch die Faserstirnfläche 4 am anderen Ende der lichtleitenden Faser 1 ausgekoppelt und an der Oberfläche des Messobjekts 11 sprechend dem Lichtpfad 5 reflektiert. Derjenige Anteil des reflektierten Lichts, welcher direkt auf die Faserstirnfläche zurück reflektiert, wird in der lichtleitenden Faser bis zur integrierten Sende- und Empfangseinheit 8 geführt und ausgewertet. Der Messpunkt dieses Fasersensors liegt exakt im Schnittpunkt der Achse der lichtleitenden Faser 1 mit der Oberfläche des Messobjekts 11.

Die Ausführung des Fasersensors in Fig. 8. nach einem weiteren Stand der Technik entspricht weitgehend derjenigen aus Fig. 7, wobei an Stelle einer einzigen lichtleitenden Faser eine Sendefaser 2 zur Führung des von der Sendereinheit 9 eingekoppelten Lichtes und eine Empfangsfaser 3 zur Rückführung des reflektierten Signals zu Empfangseinheit 10 vorgesehen ist. Bei dieser Ausführungsform liegt der Messpunkt exakt im Schnittpunkt der Achse des Fasersensors, welche sich als Mittelachse aus den beiden Fasern 2 und 3 ergibt, mit der Oberfläche des Messobjekts 11.

Fig. 11 zeigt eine integrierte Sende/Empfangseinheit für mehrkanalige Fasersensoren. Hierin wird der erste Lichtpfad 6 eines ersten integrierten Sende- Empfangselements 23a zusammen mit dem zweiten Lichtpfad 7 eines zweiten integrierten Sende- Empfangselements 23b mittels eines WDM-Kopplers 21 zu einem gemeinsamen Lichtpfad 5 kombiniert.

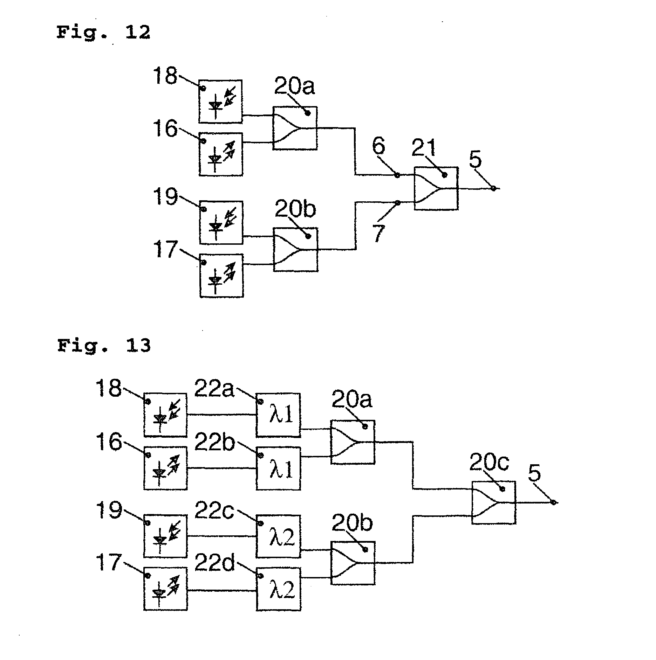

In Fig. 12 ist eine Anordnung entsprechend derjenigen aus Fig. 11 dargestellt, wobei an Stelle der integrierten Sende- Empfangselemente 23a und 23b jeweils ein erstes Empfangselement 18 mit einer ersten. Wellenlänge λ1 und ein erstes Sendeelement 16 mit derselben Wellenlänge λ1 mittels eines lxn- Kopplers miteinander kombiniert werden. In dem zweiten optischen Pfad wird ebenso ein zweites Empfangselement 19 mit einem zweiten Sendeelement 17 kombiniert, wobei beide die Wellenlänge λ2 besitzen. Selbstverständlich ist es für die Funktion nicht zwingend notwendig, dass jeweils beide Elemente exakt die gleiche Wellenlänge λ1 bzw. λ2 besitzen. Vielmehr ist es ausreichend, wenn die Elementepaare 16 und 18 bzw. 17 und 19 jeweils überlappende Arbeitsbereiche besitzen, wobei die Bereiche von λ1 und λ2 soweit voneinander entfernt sein sollten, dass sich nur ein vernachlässigbares Übersprechen ergibt.

Fig. 13 zeigt schließlich noch eine weitere Ausführungsform mit wellenlängenselektiven Filtern 22a, 22b, 22c, 22d.

### Bezugszeichenliste

- 1: lichtleitende Faser
- 2: Senderfaser
- 3: Empfangsfaser
- 4: Faserstirnfläche
- 5: Lichtpfad
- 6: erster Lichtpfad
- 7: zweiter Lichtpfad
- 8: integrierte Sende-/Empfangseinheit
- 9: Sendeeinheit
- 10: Empfangseinheit
- 11: Oberfläche des Messobjekts
- 12: erste Lichtaustrittsfläche
- 13: zweite Lichtaustrittsfläche
- 14: wellenlängenselektives Strahlteilerelement
- 15: kombinierter optischer Sender und Empfänger
- 15a: optischer Sender
- 15b: optischer Empfänger
- 16: Sendeelement λ1
- 17: Sendeelement λ2
- 18: Empfangselement λ1
- 19: Empfangselement λ2
- 20: 1xn Koppler
- 21: WDM Koppler
- 22: wellenlängenselektiver Filter
- 23: integriertes Sende-/Empfangselement
- 40: lichtleitende Faser
- 41: dritte Lichtaustrittsfläche
- 42: vierte Lichtaustrittsfläche
- 43: erste Lichtaustrittsfläche
- 44: zweite Lichtaustrittsfläche

## Patentansprüche

1. Faseroptischer Sensor umfassend
- wenigstens eine lichtleitende Faser (1), mit wenigstens einer Lichtaustrittfläche (12),
- wenigstens einen optischen Sender (15a) zur Einkopplung optischer Signale in die lichtleitende Faser (1), und
- wenigstens einen optischen Empfänger (15b) zum Empfang optischer Signale aus der lichtleitenden Faser (1),
**dadurch gekennzeichnet, dass**
die wenigstens eine lichtleitende Faser (1) der wenigstens einen Lichtaustrittsfläche (12) zugeordnete Mittel zur Ablenkung des aus der lichtleitenden Faser (1) austretenden Lichtes in eine von der Längsachse der lichtleitenden Faser (1) abweichende Richtung aufweist.

2. Faseroptischer Sensor nach Anspruch 1,
**dadurch gekennzeichnet, dass**
Mittel zur Ablenkung des aus der lichtleitenden Faser (1) austretenden Lichtes durch Reflexion, Beugung, Brechung oder Streuung vorgesehen sind.

3. Faseroptischer Sensor nach einem der vorhergehenden Ansprüche,
**dadurch gekennzeichnet, dass**
wenigstens ein Mittel zur Ablenkung des aus der lichtleitenden Faser (1) austretenden Lichtes als wenigstens eine weitere Fläche (13) ausgebildet ist.

4. Faseroptischer Sensor nach Anspruch 3,
**dadurch gekennzeichnet, dass**
wenigstens eine weitere Fläche (13) in einem solchen Winkel zur Achse der lichtleitenden Faser (1) angeordnet ist, dass an dieser zumindest ein Teil des in der lichtleitenden Faser geführten Lichtes unter einem solchen Winkel in die Faser zurück reflektiert wird, dass es durch die Faserwand selbst oder eine Lichtaustrittsfläche (12) aus der lichtleitenden Faser austritt.

5. Faseroptischer Sensor nach Anspruch 3,
**dadurch gekennzeichnet, dass**
wenigstens eine weitere Fläche (13) in einem solchen Winkel zur Achse der lichtleitenden Faser (1) angeordnet ist, dass an dieser zumindest ein Teil des in der lichtleitenden Faser geführten Lichtes unter einem von der Längsachse der lichtleitenden Faser abweichenden Winkel aus der lichtleitenden Faser austritt.

6. Faseroptischer Sensor nach einem der vorhergehenden Ansprüche,
**dadurch gekennzeichnet, dass**
wenigstens eine Lichtaustrittsfläche (12) und/oder wenigstens eine weitere Fläche (13) wellenlängenselektiv, vorzugsweise wellenlängenselektiv reflektierend, beugend oder brechend ausgeführt oder beschichtet ist.

7. Faseroptischer Sensor nach einem der vorhergehenden Ansprüche,
**dadurch gekennzeichnet, dass**
wenigstens ein optischer Sender (15a) und wenigstens ein optischer Empfänger (15b) an unterschiedlichen Enden der lichtleitenden Faser (1) angeordnet sind.

8. Faseroptischer Sensor nach einem der vorhergehenden Ansprüche,
**dadurch gekennzeichnet, dass**
wenigstens eine Austrittfläche eine aktive optische Beschichtung zur Wellenlängenkonversion des übertragenen Lichts, vorzugsweise durch nichtlineare optische Effekte, besonders bevorzugt durch den Fluoreszenzeffekt, aufweist.

9. Faseroptischer Sensor nach Anspruch 8,
**dadurch gekennzeichnet, dass**
für mindestens zwei Richtungen unterschiedliche Fluoreszenzmoleküle vorgesehen sind, welche von einem gemeinsamen Sender angeregt werden.
